# EUROPÄISCHE PATENTSCHRIFT

(11) **EP 2 076 697 B1**
(45) Veröffentlichungstag und Bekanntmachung des Hinweises auf die Patenterteilung: **15.09.2010**
(21) Anmeldenummer: 07817829.0
(22) Anmeldetag: 05.10.2007
(51) Int. Cl.: F16K 5/10

(54) **DURCHFLUßEINSTELLVENTIL**
FLOW ADJUSTMENT VALVE
VANNE DE RÉGULATION DE DÉBIT

(30) Priorität: 10.10.2006 DE 102006047879
(43) Veröffentlichungstag der Anmeldung: 08.07.2009
(73) Patentinhaber: Danfoss A/S, DK-6430 Nordborg (DK)
(72) Erfinder: MARKVART, Arne, DK-8600 Silkeborg (DK); RASMUSSEN, Bent, Karsten, DK-8600 Silkeborg (DK); CHRISTENSEN, Morten, DK-8963 Auning (DK); SCHMIDT, Jens, Pagh, DK-7400 Herning (DK); FISKER, Claus, DK-8660 Skanderborg (DK); THERKELSEN, Lars, DK-8330 Beder (DK)
(86) Internationale Anmeldenummer: PCT/DK2007/000433
(87) Internationale Veröffentlichungsnummer: WO 2008/043361

(56) Entgegenhaltungen:
- EP-A- 1 013 976
- US-A- 3 526 249
- US-A- 4 700 928

## Beschreibung

Die Erfindung betrifft ein Durchflußeinstellventil mit einem Ventilgehäuse, das einen Durchflußkanal aufweist, in dem eine Drosseleinrichtung mit einem verstellbaren Drosselelement und eine Absperreinrichtung mit einem den Durchflußkanal in einer Schließstellung verschließenden Absperrelement angeordnet ist, wobei das Ab-sperrelement durch einen Handgriff von außen betätigbar ist.

Ein derartiges Durchflußeinstellventil ist beispielsweise aus WO 01/71289 A1 bekannt.

Ein derartiges Durchflußeinstellventil dient in flüssigkeitsgefüllten Systemen, beispielsweise einer Heizungs- oder Kühlanlage, dazu, ein hydraulisches Gleichgewicht zwischen unterschiedlichen Abschnitten der Anlage einzustellen. Hierzu wird die Drosseleinrichtung so eingestellt, daß bei gegebenen Druckverhältnissen ein vorbestimmter Durchfluß durch das Durchflußeinstellventil erfolgen kann. Dieser Durchfluß ist dann der Durchfluß, der dem entsprechenden Abschnitt der Anlage zugeordnet ist. Üblicherweise ist ein derartiges Durchflußeinstellventil mit zwei Druckmeßausgängen versehen, mit deren Hilfe eine Druckdifferenz über eine Drossel ermittelt werden kann, wobei diese Druckdifferenz wiederum in einen Durchfluß umgerechnet werden kann. Die Drossel kann als Konstantdrossel ausgebildet sein. Es ist aber auch möglich, die Drosseleinrichtung als Drossel zu verwenden. In diesem Fall benötigt man zusätzlich zur Druckdifferenz noch eine Information über die Stellung des Drosselelements oder die Öffnungsweite der Drosseleinrichtung.

Vielfach wird das Durchflußeinstellventil aber auch als Absperrventil verwendet, um den entsprechenden Abschnitt der Anlage absperren zu können, wenn Wartungsarbeiten durchgeführt werden müssen.

Bei dem aus WO 01/71289 A1 bekannten Durchflußeinstellventil kann man das Absperrelement, das als Kugel ausgebildet ist, mit Hilfe des Handgriffs in eine Schließstellung verdrehen, in der es den Durchflußkanal sperrt, oder in eine Öffnungsstellung, in der ein Durchgang durch das Absperrelement in Überdeckung mit dem Durchflußkanal gebracht wird.

Der Handgriff weist eine Öffnung auf, durch die ein Werkzeug eingesteckt werden kann, mit dessen Hilfe das Drosselelement verstellt werden kann.

Wenn ein derartiges Durchflußeinstellventil einmal eingestellt worden ist, dann ist eine weitere Verstellung in der Regel nicht erforderlich. Änderungen der Einstellung ergeben sich normalerweise nur bei Änderungen in der Anlage. Aus diesem Grunde ordnet man ein derartiges Durchflußeinstellventil vielfach an unzugänglichen Positionen an, beispielsweise in einem Schacht, unter einer Decke oder dergleichen. Diese Anordnung erschwert allerdings den Zugriff eines Monteurs auf das Durchflußeinstellventil.

Dokument US 3 526 249 offenbart ein Durchflußeinstellventil gemäß dem Oberbegriff des Anspruchs 1.

Der Erfindung liegt die Aufgabe zugrunde, die Handhabung des Durchflußeinstellventils zu vereinfachen.

Diese Aufgabe wird bei einem Durchflußeinstellventil der eingangs genannten Art dadurch gelöst, wie im kennzeichnenden Teil des Anspruchs 1 offenbart wurde.

Mit einer derartigen Ausbildung ist es für den Monteur nicht länger erforderlich, ein Werkzeug zu handhaben, also es in das Durchflußeinstellventil einzuführen, um das Drosselelement zu verstellen. Vielmehr kann er den Handgriff verwenden, auf den er ohnehin von außen Zugriff hat. Der Handgriff erfüllt dann eine Doppelfunktion. Man kann ihn einerseits verwenden, um die Ab-sperreinrichtung in einen Schließzustand zu bringen, so daß der entsprechende Abschnitt der Anlage abgeschaltet ist. Zum anderen kann man den Handgriff verwenden, um den Durchfluß einzustellen.

Hierbei ist bevorzugt, daß der Handgriff und das Absperrelement miteinander kuppelbar sind. Mit dieser Ausgestaltung ist es möglich, die Betätigung des Absperrelements und die Betätigung des Drosselelements unabhängig voneinander vorzunehmen. Zumindest kann das Drosselelement mit dem Handgriff verstellt werden, ohne daß das Absperrelement gleichzeitig mit bewegt wird. Dies erleichtert die Handhabung weiter.

Vorzugsweise ist das Drosselelement an einer Spindel angeordnet, die verstellbar in einem Mitnehmer angeordnet ist, mit dem das Absperrelement verbunden ist. Der Handgriff wirkt über den Mitnehmer auf das Absperrelement, wenn er die Absperreinrichtung betätigt. Wenn nur das Drosselelement verstellt werden soll, dann wirkt der Handgriff nur auf das Drosselelement und zwar über die Spindel. Eine Kopplung zwischen dem Handgriff und dem Absperrelement ist in diesem Fall aufgelöst.

Hierbei ist es von Vorteil, wenn die Spindel über eine Gewindepaarung mit dem Mitnehmer in Eingriff steht. Dies gilt insbesondere dann, wenn das Absperrelement als Kugel eines Kugelhahns ausgebildet ist. Wenn der Handgriff gedreht wird, ohne daß er in Wirkverbindung mit dem Absperrelement steht, dann wird die Spindel durch das Verdrehen im Mitnehmer axial verlagert, so daß sich die Stellung des Drosselelements verändert. Wenn hingegen der Handgriff mit dem Mitnehmer in Eingriff gebracht worden ist, so daß eine Wirkverbindung zwischen dem Handgriff und dem Absperrelement besteht, dann wird zwar die Spindel gemeinsam mit dem Handgriff gedreht. Da sich aber aufgrund des gleichzeitigen Verdrehens des Mitnehmers durch den Handgriff keine relative Drehung zwischen der Spindel und dem Mitnehmer ergibt, bleibt die Position des Drosselelements unverändert, wenn die Absperreinrichtung betätigt wird. Nach dem Absperren bzw. nach dem Aufheben der Absperrung ist also keine neue Einstellung der Drosseleinrichtung erforderlich. Die einmal gewählte Einstellung bleibt erhalten, unabhängig davon, wie oft die Absperreinrichtung betätigt wird. Es spielt auch keine Rolle, ob man beim Schließen oder Öffnen der Absperreinrichtung den Handgriff um ein Viertel, Dreiviertel, Fünfviertel eines Kreises oder andere Winkel verdreht. In jedem Fall bleibt die Einstellung des Drosselelements erhalten.

Vorzugsweise ist der Handgriff translatorisch verlagerbar, wobei er bei Bewegung in eine erste Richtung in Wirkverbindung mit dem Absperrelement kommt und bei Bewegung in eine zweite Richtung, die der ersten Richtung entgegengesetzt ist, die Wirkverbindung löst. Dies ist eine relativ einfache Möglichkeit, die Wirkverbindung zwischen dem Handgriff und dem Absperrelement einzurichten oder aufzuheben. Auch an unzulänglichen Stellen kann der Monteur den Handgriff einfach verlagern, wenn er die Absperreinrichtung betätigen oder nur die Drosseleinrichtung verstellen möchte.

Hierbei ist bevorzugt, daß der Handgriff als Drehgriff ausgebildet ist, der drehbar und axial verlagerbar am Ventilgehäuse angeordnet ist. Zum Betätigen der Ab-sperreinrichtung muß der Handgriff axial verlagert werden. Danach kann er gedreht werden, um das Absperrelement zu betätigen. Wenn hingegen nur eine Verstellung der Drosseleinrichtung gewünscht ist, wird der Handgriff in die andere Richtung axial verlagert, so daß er nur das Drosselelement verstellt, nicht jedoch das Absperrelement betätigt.

Vorzugsweise ist eine Arretiereinrichtung vorgesehen, mit der der Handgriff in einer Position arretierbar ist, in der er mit dem Absperrelement in Wirkverbindung steht. Üblicherweise möchte man bei einer einmal erfolgten Einstellung der Drosseleinrichtung bleiben, so daß die Drosseleinrichtung nicht versehentlich verstellt werden darf. Dies läßt sich in einfacher Weise dadurch erreichen, daß man den Handgriff mit dem Absperrelement in Wirkverbindung bringt und ihn in dieser Position arretiert. In diesem Fall ist nämlich nur die Absperreinrichtung betätigbar, die Drosseleinrichtung ist jedoch nicht verstellbar.

Hierbei ist bevorzugt, daß die Arretiereinrichtung eine vorgespannte Federanordnung aufweist, die die Arretiereinrichtung in der Position des Handgriffs wirksam macht, in der er mit dem Absperrelement in Wirkverbindung steht. Wenn die Einstellung der Drosseleinrichtung erfolgt ist, dann kann man einfach den Handgriff in die Wirkverbindung mit der Absperreinrichtung verlagern, wobei die Arretiereinrichtung wirksam wird. Beispielsweise kann sie unter der Wirkung der vorgespannten Federanordnung in einer Halterung einrasten. Ein selbsttätiges Lösen der Arretiereinrichtung ist dann nicht möglich. Vielmehr muß ein Monteur dann aktiv tätig werden, um die Arretiereinrichtung wieder lösen zu können.

Bevorzugterweise deckt der Handgriff im arretierten Zustand eine Befestigungsmutter ab. In diesem Fall ist es nicht möglich, den Handgriff vom Durchflußeinstellventil zu lösen. Die Befestigungsmutter ist durch den Handgriff selbst abgedeckt. Dies ist eine weitere Sicherheit dagegen, daß Unbefugte die Drosseleinrichtung verstellen.

Vorzugsweise ist eine Schließstellungsanzeige am Handgriff angeordnet. In vielen Fällen wird man anhand der Winkelstellung des Handgriffs nicht erkennen können, ob die Absperreinrichtung den Durchgang durch den Durchflußkanal sperrt oder nicht. Eine Schließstellungsanzeige kann aber den entsprechenden Zustand signalisieren.

Hierbei ist bevorzugt, daß die Schließstellungsanzeige durch die Verlagerung des Handgriffs aktivierbar ist. Wenn der Handgriff nur verwendet wird, um die Drossel-einrichtung zu verstellen, dann kann der Handgriff in beliebiger Weise gedreht werden, ohne daß die Schließstellungsanzeige sichtbar wird. Wenn hingegen der Handgriff verlagert worden ist, dann zeigt die Schließstellungsanzeige an, ob das Absperrelement den Durchflußkanal sperrt oder nicht.

Vorzugsweise ist das Absperrelement über eine Drehmomentangriffsfläche betätigbar, die bei montiertem Handgriff vom Handgriff abgedeckt ist. Damit ist es möglich, auch dann eine Absperrung des Abschnitts der Anlage durchzuführen, wenn der Handgriff abgenommen worden ist und fehlt. Auch dies ist eine Maßnahme, die manche Monteure ergreifen, um ein versehentliches Verstellen der Drosseleinrichtung zu verhindern. Wenn dann ein Absperren des Abschnitts der Anlage in kurzer Zeit erforderlich ist, beispielsweise weil ein Notfall aufgetreten ist, dann hat man über die Drehmomentangriffsfläche, beispielsweise einen normalen Sechskant, die Möglichkeit, mit einem anderen Werkzeug die Absperrfunktion des Durchflußeinstellventils zu nutzen.

Die Erfindung wird im folgenden anhand eines bevorzugten Ausführungsbeispiels in Verbindung mit der Zeichnung beschrieben. Hierin zeigen:
- Fig. 1: eine Seitenansicht eines Durchflußeinstellventils, teilweise im Schnitt I-I nach Fig. 3,
- Fig. 2: eine Schnittansicht II-II nach Fig. 3 und
- Fig. 3: eine Draufsicht auf das Durchflußeinstellventil.

Ein Durchflußeinstellventil 1 weist ein Ventilgehäuse 2 auf, in dem ein Durchflußkanal 3 angeordnet ist.

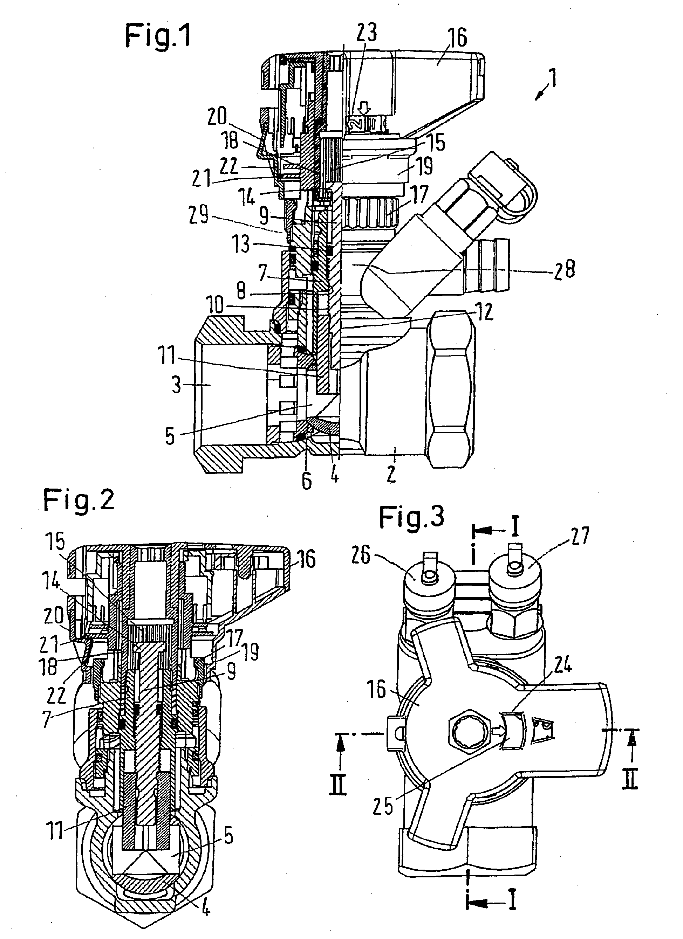

Im Durchflußkanal ist eine Absperreinrichtung mit einem Absperrelement 4 angeordnet, das als Kugel ausgebildet ist, wobei die Kugel einen Durchgang 5 aufweist, so daß in der in Fig. 1 dargestellten Position das Durchfluß-einstellventil geöffnet ist. In der in Fig. 2 dargestellten Stellung des Absperrelements 4 ist der Durchgang 5 quer zum Durchflußkanal 3 angeordnet. Hier ist das Durchflußeinstellventil 1 gesperrt. Das Absperrelement 4 wirkt mit einem Ventilsitz 6 zusammen.

Das Absperrelement 4 ist drehfest mit einem Mitnehmer 7 verbunden. Wenn der Mitnehmer 7 gedreht wird, dann wird auch das Absperrelement 4 gedreht, um den Durchflußkanal 3 freizugeben oder zu sperren.

Der Mitnehmer 7 weist ein Innengewinde 8 auf, in das eine Spindel 9 mit einem Außengewinde 10 eingeschraubt ist. An der Spindel 9 ist ein Drosselelement 11 befestigt, das durch ein Verdrehen der Spindel 9 parallel zur Rotationsachse 12 verlagerbar ist. Durch eine Verlagerung des Drosselelements 11 wird der Durchgang 5 durch das Absperrelement 4 mehr oder weniger freigegeben.

Die Spindel 9 ist gegenüber dem Mitnehmer 7 durch eine Dichtung 13 abgedichtet. Das Drosselelement 11 bildet zusammen mit dem Absperrelement 4 eine Drosseleinrichtung.

Die Spindel 9 weist an ihrem oberen Ende eine Durchmessererweiterung 14 auf, die mit einer Außenverzahnung versehen ist, die mit einer Innenverzahnung 15 in Eingriff steht, die in einem Handgriff 16 ausgebildet ist. Der Handgriff 16 ist mit einer Überwurfmutter 17 am Ventilgehäuse 2 gehalten.

Durch die Innenverzahnung 15 ist die Verbindung zwischen der Durchmessererweiterung 14 der Spindel 9 und dem Handgriff 16, der als Drehgriff ausgebildet ist, zwar drehfest. Die Spindel 9 ist gegenüber dem Handgriff 16 aber in axialer Richtung verlagerbar, was zu zwei Zwecken ausgenutzt wird. Zum einen ist es möglich; die Spindel 9 gegenüber dem Drehgriff 16 in axialer Richtung zu verlagern, wenn das Drosselelement 11 verstellt wird. Zum anderen ist es aber auch möglich, den Drehgriff 16 gegenüber dem Ventilgehäuse 2 zu verlagern, um den Handgriff 16 mit einem Fortsatz 18 in Eingriff mit dem Mitnehmer 7 zu bringen.

In Fig. 1 ist der Handgriff 16 in einer Position, in der er mit dem Mitnehmer 7 nicht gekuppelt ist. In diesem Fall wird bei der Drehung des Handgriffs 16 ausschließlich die Spindel 9 im Mitnehmer 7 verdreht. Da der Mitnehmer 7 ortsfest im Ventilgehäuse 2 gehalten ist, führt die Drehung des Handgriffs 16 dann zu einer Verlagerung des Drosselelements 11 und damit zu einer Verstellung des freien Querschnitts des Durchgangs 5.

In Fig. 2 ist eine Situation dargestellt, in der der Handgriff 16 auf das Ventilgehäuse 2 hin verlagert worden ist, so daß der Fortsatz 18 mit dem Mitnehmer 7 in Eingriff kommt. In dieser Situation ist der Handgriff 16 mit dem Absperrelement 4 drehfest gekuppelt. In dieser Situation führt eine Drehung des Handgriffs 16 nur zu einer entsprechenden Drehung des Absperrelements 5, also zu einem Absperren oder Freigeben des Durchflußkanals 3.

Bei einer Drehung des Handgriffs 16 dreht sich zwar auch die Spindel 9 mit, weil die Durchmessererweiterung 14 nach wie vor mit der Innenverzahnung 15 in Eingriff steht. Da sich gleichzeitig aber auch der Mitnehmer 7 dreht, erfolgt keine Relativdrehung zwischen der Spindel 9 und dem Mitnehmer 7. Die axiale Lage der Spindel 9 im Mitnehmer 7 und damit die Stellung des Drosselelements 11 im Durchgang 5 ändert sich also bei einer Drehung des Handgriffs 16 nicht. Die Einstellung der Drosseleinrichtung 5, 11 bleibt also erhalten.

Der Handgriff 16 weist eine zum Ventilgehäuse 2 hin gerichtete Schürze 19 auf, die die Überwurfmutter 17 abdeckt, wenn der Handgriff 16 in der in Fig. 2 dargestellten Position ist, also wenn der Handgriff 16 in Wirkverbindung mit dem Absperrelement 4 steht.

Der Handgriff 16 weist ein oder mehrere Federelemente 20 auf, die radial nach außen vorgespannt sind. Das Federelement 20 wird durch einen umlaufenden Flansch 21, der auf einen Schenkel 22 des Federelements 20 wirkt, in gespanntem Zustand gehalten.

Wenn der Handgriff 16 axial in Richtung auf das Ventilgehäuse 2 verlagert worden ist, dann rastet der Schenkel 22 hinter dem Flansch 21 ein, so daß der Handgriff 16 gegen eine Rückbewegung vom Ventilgehäuse 2 weg arretiert ist. Da sich der Schenkel 22 im arretierten Zustand radial innerhalb der Schürze 19 befindet, ist er von außen nicht ohne weiteres zugänglich, sondern man müßte ein Werkzeug verwenden, um den Schenkel 22 so weit nach außen zu biegen, daß die Arretierung des Handgriffs 16 gelöst wird.

Der Handgriff 16 weist mindestens ein Fenster 23 auf, durch das Zahlen oder andere Symbole zu sehen sind; die eine Aussage über den Drehwinkel des Handgriffs 16 erlauben. Damit läßt sich die Stellung des Drosselelements 11 bestimmen. In Fig. 1 ist ein Fenster auf dem Umfang des Handgriffs 16 dargestellt. In Fig. 3 ist ein weiteres Fenster 24 an der Stirnseite des Handgriffs 16 dargestellt.

Das Fenster 24 wird auch als Schließsteltungsanzeiger verwendet. Wenn der Handgriff 16 in die in Fig. 2 dargestellte Position verlagert worden ist, in der er in Eingriff mit dem Absperrelement 4 steht, dann erscheint bei einer Drehung des Handgriffs 16 in die Schließstellung des Absperrelements 4 eine Markierung 25 im Fenster 24. Wenn sich hingegen der Handgriff 16 in der in Fig. 1 dargestellten Position befindet, in der er nicht in Eingriff mit dem Absperrelement 4 steht, dann erscheint unabhängig von der Drehstellung des Handgriffs 16 die Markierung 25 nicht im Fenster 24.

Der Mitnehmer 7 weist in nicht näher dargestellter Weise eine Drehmomentangriffsfläche auf, die aber nur dann zugänglich ist, wenn der Handgriff 16 demontiert ist. Damit ist es möglich, das Absperrelement 4 auch dann zu betätigen, wenn der Handgriff 16 fehlt.

Zwei Meßausgänge 26, 27 sind vorgesehen, um die Drücke auf beiden Seiten der durch das Drosselelement 11 gebildeten Drosselstelle nach außen zu leiten. Die Meßausgänge 26, 27 sind an einem Flansch 28 angeordnet, der drehbar auf einem etwa rechtwinklig zum Durchflußkanal 3 vom Ventilgehäuse 2 abstehenden Stutzen 29 angeordnet ist. Dadurch werden die Meßausgänge 26, 27 aus mehreren Richtungen zugänglich.

## Patentansprüche

1. Durchflußeinstellventil (1) mit einem Ventilgehäuse, das einen Durchflußkanal (3) aufweist, in dem eine Drosseleinrichtung mit einem verstellbaren Drosselelement (11) und eine Absperreinrichtung mit einem den Durchflußkanal in einer Schließstellung verschließenden Absperrelement (4) angeordnet ist, wobei das Absperrelement (4) durch einen Handgriff (16) von außen betätigbar ist, **dadurch gekennzeichnet, daß** der Handgriff (16) translatorisch verstellbar ist, wobei in einer ersten Stellung des Handgriffs das Absperrelement (4), nicht jedoch das Drosselelement (11), verstellt wird und in einer zweiten Stellung des Handgriffs das Drosselelement (11), nicht jedoch das Absperrelement (4), verstellt wird.

2. Ventil nach Anspruch 1, **dadurch gekennzeichnet, daß** der Handgriff (16) und das Absperrelement (4) miteinander kuppelbar sind.

3. Ventil nach Anspruch 1 oder 2, **dadurch gekennzeichnet, daß** das Drosselelement (11) an einer Spindel (9) angeordnet ist, die verstellbar in einem Mitnehmer (7) angeordnet ist, mit dem das Absperrelement (4) verbunden ist.

4. Ventil nach Anspruch 3, **dadurch gekennzeichnet, daß** die Spindel (9) über eine Gewindepaarung (8, 10) mit dem Mitnehmer (7) in Eingriff steht.

5. Ventil nach einem der Ansprüche 1 bis 4, **dadurch gekennzeichnet, daß** der Handgriff (16) bei Bewegung in eine erste Richtung in Wirkverbindung mit dem Absperrelement (4) kommt und bei Bewegung in eine zweite Richtung, die der ersten Richtung entgegengesetzt ist, die Wirkverbindung löst.

6. Ventil nach Anspruch 5, **dadurch gekennzeichnet, daß** der Handgriff (16) als Drehgriff ausgebildet ist, der drehbar und axial verlagerbar am Ventilgehäuse (2) angeordnet ist.

7. Ventil nach Anspruch 5 oder 6, **dadurch gekennzeichnet, daß** eine Arretiereinrichtung (20-22) vorgesehen ist; mit der der Handgriff (16) in einer Position arretierbar ist, in der er mit dem Absperrelement (4) in Wirkverbindung steht.

8. Ventil nach Anspruch 7, **dadurch gekennzeichnet, daß** die Arretiereinrichtung (20-22) eine vorgespannte Federanordnung (20) aufweist, die die Arretiereinrichtung (20-22) in der Position des Handgriffs (16) wirksam macht, in der er mit dem Absperrelement (4) in Wirkverbindung steht.

9. Ventil nach Anspruch 7 oder 8, **dadurch gekennzeichnet, daß** der Handgriff (16) im arretierten Zustand eine Befestigungsmutter (17) abdeckt.

10. Ventil nach einem der Ansprüche 1 bis 9, **dadurch gekennzeichnet, daß** eine Schließstellungsanzeige (24, 25) am Handgriff (16) angeordnet ist.

11. Ventil nach Anspruch 10, **dadurch gekennzeichnet, daß** die Schließstellungsanzeige (24, 25) durch die Verlagerung des Handgriffs (16) aktivierbarist.

12. Ventil nach einem der Ansprüche 1 bis 11, **dadurch gekennzeichnet, daß** das Absperrelement (4) über eine Drehmomentangriffsfläche betätigbar ist, die bei montiertem Handgriff (16) vom Handgriff (16) abgedeckt ist.

## Claims

1. Flow adjustment valve (1) with a valve housing (2) comprising a flow channel (3), in which is arranged a throttle unit (4, 11) with an adjustable throttle element (11) and a shut-off unit comprising a shut-off element (4) blocking the flow channel (3) in a closed position, the shut-off element (4) being actuatable from the outside by means of a handle (16), **characterised in that** the handle (16) is translatorically adjustable, so that in a first position the shut-off element (4), not, however, the throttle element (11), is adjusted, and in a secon position of the handle the throttle element (11), not, however, the shut-off element (4), is adjusted.

2. Valve according to claim 1, **characterised in that** the handle (16) and the shut-off element (4) are mutually connectable.

3. Valve according to claim 1 or 2, **characterised in that** the throttle element (11) is arranged at a spindle (9), which is located adjustably in a tappet (7), to which the shut-off element (4) is connected.

4. Valve according to claim 3, **characterised in that** the spindle (9) engages the tappet (7) via a threaded pair (8, 10).

5. Valve according to one of the claims 1 to 4, **characterised in that**, when moved in a first direction, the handle (16) is actively connected to the shut-off element (4) and, when moved in a second direction, which is opposite to the first direction, the active connection is disengaged.

6. Valve according to claim 5, **characterised in that** the handle (16) is a twist handle, which is rotatably and axially displaceably arranged at the valve housing (2).

7. Valve according to claim 5 or 6, **characterised in that** a blocking device (20-22) is provided, with which the handle (16) can be blocked in a position, in which it is in active connection to the shut-off element (4).

8. Valve according to claim 7, **characterised in that** the blocking device (20-22) comprises a prestressed spring arrangement (20), which activates the blocking device (20-22) in the position of the handle (16), in which it is in active connection to the shut-off element (4).

9. Valve according to claim 7 or 8, **characterised in that** in the blocked state the handle (16) covers a fixing nut (17).

10. Valve according to one of the claims 1 to 9, **characterised in that** a closed position indication (24, 25) is arranged at the handle (16).

11. Valve according to claim 10, **characterised in that** the closed position indication (24, 25) is activated by the displacement of the handle (16).

12. Valve according to one of the claims 1 to 11, **characterised in that** the shut-off element (4) is actuatable via a torque application surface, which is covered by the handle (16), when the handle is mounted (16).

## Revendications

1. Vanne de régulation de débit (1) avec un boîtier de vanne qui présente un canal de débit (3), dans lequel est disposé un dispositif d'étranglement avec un élément d'étranglement réglable (11) et un dispositif d'obturation avec un élément d'obturation (4) fermant le canal de débit dans une position fermée, l'élément d'obturation (4) pouvant être actionné de l'extérieur par une poignée (16), **caractérisée en ce que** la poignée (16) est réglable de manière translatoire, l'élément d'obturation (4) étant réglé dans une première position de la poignée mais pas l'élément d'étranglement (11) et l'élément d'étranglement (11) étant réglé dans une seconde position de la poignée, mais pas l'élément d'obturation (4).

2. Vanne selon la revendication 1, **caractérisée en ce que** la poignée (16) et l'élément d'obturation (4) peuvent être couplés l'un à l'autre.

3. Vanne selon la revendication 1 ou 2, **caractérisée en ce que** l'élément d'étranglement (11) est disposé sur une broche (9) qui est disposée de manière réglable dans un élément d'entraînement (7), auquel est relié l'élément d'obturation (4).

4. Vanne selon la revendication 3, **caractérisée en ce que** la broche (9) se trouve en engagement par le biais d'un appariement fileté (8, 10) avec l'élément d'entraînement (7).

5. Vanne selon l'une quelconque des revendications 1 à 4, **caractérisée en ce que**, lors du mouvement dans une première direction, la poignée (16) entre en liaison fonctionnelle avec l'élément d'obturation (4) et détache la liaison fonctionnelle lors du mouvement dans une seconde direction opposée à la première direction.

6. Vanne selon la revendication 5, **caractérisée en ce que** la poignée (16) est réalisée comme une poignée tournante qui est disposée de manière à pouvoir tourner et se déplacer axialement sur le boîtier de vanne (2).

7. Vanne selon la revendication 5 ou 6, **caractérisée en ce qu'**un dispositif d'arrêt (20-22) est prévu, avec lequel la poignée (16) peut être arrêtée dans une position, dans laquelle elle est en liaison fonctionnelle avec l'élément d'obturation (4).

8. Vanne selon la revendication 7, **caractérisée en ce que** le dispositif d'arrêt (20-22) présente un ensemble de ressort (20) précontraint qui active le dispositif d'arrêt (20-22) dans la position de la poignée (16), dans laquelle elle est en liaison fonctionnelle avec l'élément d'obturation (4).

9. Vanne selon la revendication 7 ou 8, **caractérisée en ce que** la poignée (16) recouvre à l'état arrêté un écrou de fixation (17).

10. Vanne selon l'une quelconque des revendications 1 à 9, **caractérisée en ce qu'**une indication de position fermée (24, 25) est disposée sur la poignée (16).

11. Vanne selon la revendication 10, **caractérisée en ce que** l'indication de position fermée (24, 25) peut être activée par le déplacement de la poignée (16).

12. Vanne selon l'une quelconque des revendications 1 à 11, **caractérisée en ce que** l'élément d'obturation (4) peut être actionné par une surface effective de couple qui est recouverte par la poignée (16) lorsque celle-ci est montée.
